# EUROPÄISCHE PATENTSCHRIFT

(11) **EP 1 151 220 B1**
(45) Veröffentlichungstag und Bekanntmachung des Hinweises auf die Patenterteilung: **03.09.2003**
(21) Anmeldenummer: 00902620.4
(22) Anmeldetag: 19.01.2000
(51) Int. Cl.: F16L 47/06

(54) **ROHRKUPPLUNG FÜR KUNSTSTOFFROHRE**
PIPE COUPLING FOR PLASTIC PIPES
ACCOUPLEMENT DE TUYAUX DESTINE A DES TUYAUX PLASTIQUE

(30) Priorität: 22.01.1999 DE 19902456
(43) Veröffentlichungstag der Anmeldung: 07.11.2001
(73) Patentinhaber: C-Tech Ltd., Diplomatic Area, Manama (BH)
(72) Erfinder: CARLSTRÖM, Börge, S-263 58 Höganäs (SE)
(74) Vertreter: König, Beate, Dipl.-Phys. Dr.
(86) Internationale Anmeldenummer: EP0000405
(87) Internationale Veröffentlichungsnummer: WO00043706

(56) Entgegenhaltungen:
- EP-A- 0 787 937
- FR-A- 2 331 737
- US-A- 4 174 125
- US-A- 4 513 996
- US-A- 5 330 238

## Beschreibung

Die Erfindung betrifft eine Rohrkupplung aus glasfaserverstärktem Kunststoff und einer Membrane aus elastischem Material, welche auch als Dichtung wenigstens auf einer Seite ausgebildet ist.

Aus der EP 0 651 506 B1 ist eine mit einer Dichtungshülse versehene Muffe zur Verbindung von zwei Kunststoffrohren bekannt, bei der von einem Stand der Technik gegangen wurde, bei dem die beiden identisch ausgebildeten Teilabschnitte zur Aufnahme von je einem Rohrende im wesentlichen gleich lang sind. Die bekannte Muffe hat zwei deutlich unterschiedlich lange (z.B. vorzugsweise mit Längenverhältnis 1:3 und kleiner) zylindrische Randabschnitte und zwischen diesen eine ringförmige Aussparung, in der die Dichtungshülse aufgenommen ist. Die Dichtungshülse hat an ihren Endabschnitten je eine Dichtungslippe, zwischen denen sich ein zylindrischer Abschnitt befindet. Dieser ist durch eine in das Innere der Muffe ragende Rippe in einen dem längeren Randbereich zugewandten kürzeren Teil und in einen dem kürzeren Randbereich zugewandten längeren Teil unterteilt.

Aus der US 4 642 156 ist ein Verfahren zur Herstellung einer Dichtungshülse bekannt, die eine Stopp-Rippe, Dichtungslippen, jedoch keinen zylindrischen Abschnitt aufweist.

Aus der US-A-5 330 238 ist eine Rohrkupplung aus einer Muffe mit einer im wesentlichen zylindrischen Außenschicht 22 aus glasfaserverstärktem Kunststoff und einer aus Polyurethan bestehenden Innenschicht 23 bekannt. Beim Aufschieben der Rohre verformt sich das Muffeninnere und die Polyurethanschicht 23 wird insbesondere im Bereich von zwei ringsumlaufend vorgesehenen flachen Dichtungswülsten 28 und 29 in einer sich konisch erweiternden Muffenfläche 27 komprimiert. An einem Ende befindet sich ein zylindrischer Abschnitt 33, der an seinem äußeren Ende noch mit einer Anschrägung 34 versehen sein kann. Eine Verankerung der Innenschicht 23 ist nicht vorgesehen, so daß die Lagestabilität der Rohrkupplung von der Haftung der Innenschicht 23 an der Außenschicht 22 abhängt. Die Rohrkupplung kann daher nicht bei hohen Innendrücken, sondern nur in drucklosen Systemen eingesetzt werden.

Eine aus der EP 0 787 937 A bekannte Muffe ist als Dichtmanschette aus elastischem Material mit allgemeiner Zylinderform ausgebildet, die an beiden Seiten mit einem Dichtungswulst 35 versehen ist und im Zentrum eine Rippe 32 aufweist. Die Dichtungswülste dienen zur lokalen Druckerhöhung und Sicherstellung eines ausreichenden Dichtungskontaktes.

In der US 4 513 996 ist eine Rohrkupplung beschrieben, deren Muffenteil in einem sich nach außen erweiternden Ringflansch endet. Die Membrane ist der Muffenrorm entsprechend angepaßt und mit in Muffenrillen eingreifenden Rippen versehen. Weder die Wanddicke der Membrane, noch der Durchmesser ist konstant, wodurch es bereichsweise zu Spitzenbelastungen der Muffe kommt. Da die Membrane nur mittels Rillen und Nuten mit der Muffe verbunden, nicht aber dort verankert und in den Endbereichen auch nicht abgestützt ist, kommt es bei höheren Innendrücken leicht zu einer Delaminierung und zu einem Ausblasen der Membrane.

Der Erfindung liegt die Aufgabe zugrunde, eine Rohrkupplung zu schaffen, die bei hohen Drücken, insbesondere Innendrücken von 2,5 bis 5,0 MPa (25 bis 50 bar), verwendet werden kann, ohne daß Beschädigungen der Kupplung bei Ausdehnung des Rohrs infolge erhöhten Innendrucks auftreten, wobei die Rohrkupplung auch bei versetzten und/oder abgewinkelten Rohrachsen verwendet werden kann.

Diese Aufgabe ist erfindungsgemäß bei einer Rohrkupplung mit den Merkmalen des Anspruchs 1 gelöst. Vorteilhafte Weiterbildungen der erfindungsgemäßen Rohrkupplung sind Gegenstand der abhängigen Ansprüche.

Eine erfindungsgemäße Rohrkupplung umfaßt eine Muffe aus glasfaserverstärktem Kunststoff und einer Membrane aus elastischem Material, welche auf wenigstens einer Seite als Dichtung ausgebildet ist und einen Hülsenteil aufweist. Da, wo die Membrane als Dichtung ausgebildet ist, liegt bei dem Abschluß der Membrane, wo das Rohr eingeführt wird (also am Außenende), ein kurzer Teil zylindrisch vor. Im zylindrischen Teil hat die Membrane eine konstante Wanddicke, über welche der glasfaserverstärkte Muffenteil der Rohrkupplung kommt. Außerhalb des zylindrischen Teils ist die weitere Ausbildung der Rohrkupplung so, daß ein Winkel eingebaut ist, welcher mindestens so groß wie die zulässige Abwinklung der Kupplung ist, und daß über diesem Winkelteil der Rohrkupplung die Membrane in der Muffe verankert ist. Dies ermöglicht die Verbindung von Rohren auch mit zueinander versetzt und/oder abgewinkelt verlaufenden Längsachsen.

Die erfindungsgemäße Rohrkupplung eignet sich für den Einsatz bei hohen Drücken, etwa 1,5 bis 5,0 MPa (15 bis 50 bar) (abhängig von den Rohrdurchmessern). Mit dem erfindungsgemäß vorgesehenen Aufbau'der Rohrkupplung ist eine sichere Verbindung und Abdichtung von Kunststoffrohren, insbesondere GFK-Rohren auf der Basis von glasfaserverstärkten Kunststoffen ermöglicht, indem der kurze zylindrische Teil den Dichtungsteil entlastet. Durch die kurze Erstreckung dieses Membranabschnitts kann dieser sich bei Ausdehnung, d.h. Aufweiten des Rohrs im Durchmesser, in Reaktion hierauf in Längsrichtung ausdehnen, wodurch die Muffe durch die Rohraufweitung mechanisch nicht beansprucht wird. Der auf die Muffe gerichtete Dilatationshub des Rohrs wird so aufgefangen.

Wenn der zylindrische Abschnitt in einem kleinen Winkel angeordnet wird, ist zwar eine Abwinkelung eines Anschlußrohrs ermöglicht. Es wird dann jedoch ein nachteiliger Druck auf die Muffe ausgeübt.

Es kann auch nur eine Seite mit einer vorstehend erwähnten Abwinklung ausgebildet sein, wobei die andere Seite keine Abwinklung eines Rohrs erlaubt. Dann wird hauptsächlich auf der einen Seite eine Abwinkelung zwischen Rohr und Kupplung aufgenommen und auf der anderen Seite ist aber eine teleskopische Bewegung des dort befindlichen Rohrs möglich.

Vorteilhaft erfolgt die Dimensonierung der Massen so, daß bei einem Innendruck in dem Rohr von 1,0 x PN (0,098 MPa [0,98 bar]) bis 1,5 x PN (0,147 MPa [1,47 bar]) [Nenndruck] das Rohr an dem zylindrischen Teil der Rohrkupplung ohne Pressung anliegt.

Auf der Seite, wo keine Abwinklung vorgesehen ist, kann die Dichtung durch einen Ring aus elastischem Material mit Dichtungselementen montiert auf dem vorderen Ende eines zu kuppelnden Rohres vorgesehen sein, wobei die Dichtungselemente mit der Membrane aus elastischem Material der Kupplung eine Abdichtung bewirken.

Vorzugsweise ist die Membrane und/oder der mit Dichtungselementen versehene Ring aus Gummi, das eine Abdichtung gegen Durchtreten jeglichen Materials besonders zuverlässig sicherstellt.

Die Erfindung wird untenstehend mittels Beispielen und anhand der Zeichnungen beschrieben, wobei diese Darstellung zur Erläuterung der Erfindung dient, diese jedoch mit den Konkretisierungen nicht einschränken soll. Es zeigen
- Fig. 1: eine schematische Schnittansicht einer Rohrkupplung, die gemäß einem ersten Ausführungsbeispiel der Erfindung ausgeführt ist, und
- Fig. 2: eine schematische Schnittansicht einer Rohrkupplung, die gemäß einem zweiten Ausführungsbeispiel der Erfindung ausgeführt ist.

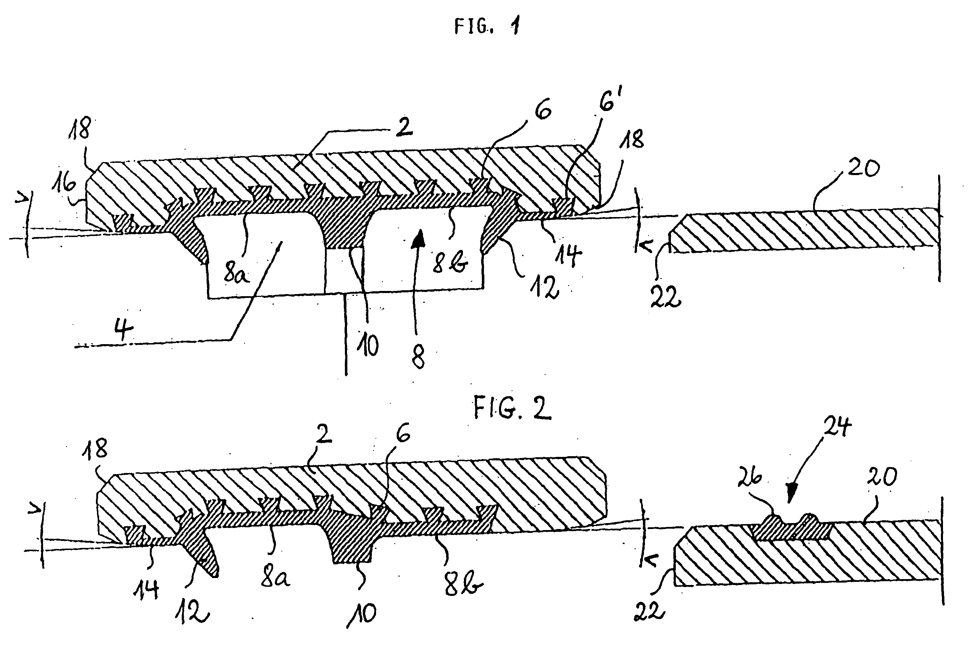

Fig. 1 zeigt eine Rohrkupplung, die auf beiden Seiten eine Abwinkelung zwischen Rohr und Kupplung zuläßt. Die Rohrkupplung umfaßt eine im wesentlichen zylindrische Muffe 2 aus glasfaserverstärktem Kunststoff. Die Muffe weist auf der Innenseite eine Aussparung auf, in der als Dichtung eine Membrane 4 aus elastischem Material, hier aus Gummi, aufgenommen ist. Die Membrane 4 ist mittels Ringwülsten 6 in der Muffe 2 verankert. Sie weist einen zentralen zylindrischen Hülsenabschnitt 8 auf, der durch eine nach innen ragende Rippe 10 in zwei im wesentlichen gleich lange Abschnitte 8a, 8b unterteilt ist. Der zentrale Hülsenabschnitt 8 ist durch zwei Dichtungslippen 12 begrenzt. Außerhalb der Dichtungslippen 12 erstreckt sich jeweils ein kurzer zylindrischer Bereich 14 mit geringerer Wandstärke, der am Ende mit einem (6') der zuvor erwähnten Ringwülste 6 verankert ist. Der Innendurchmesser des kurzen zylindrischen Bereichs 14 ist kleiner als derjenige des zentralen zylindrischen Bereichs 8. Bereits im Bereich des äußersten Ringwulstes 6' verjüngt sich der Rand der Muffe in einem Winkel V, wobei die Muffe an den Übergängen zu den Stirnseiten 16 jeweils eine Fase 18 aufweist. In Fig. 1 ist auf der rechten Seite ein Teil einer Rohrwand eines mit der Rohrkupplung zu verbindenden Rohrs bzw. Rohrendes 20 schematisch dargestellt.

Wie aus der Darstellung ersichtlich ist, fluchtet die Außenwandung des Rohrs 20 im wesentlichen mit der Wandung des kurzen zylindrischen Abschnitts 14. Beim Einschieben legt das Rohr 20 dann die Dichtungslippe 12 unter Erzielung einer Dichtungswirkung um, wobei das Dichtungslippenmaterial komprimiert wird. Sofern das Rohr 20 überhaupt so weit in die Rohrkupplung hineingeschoben wird, stößt es in der Endstellung mit seiner Stirnseite 22 an die Rippe 10. Durch die Abwinkelung um den Winkel V ist es möglich, beim Einschieben das Rohr 20 maximal mit einem entsprechenden Winkel zur Kupplungslängsachse einzuführen, wodurch beispielsweise montagebedingte Toleranzen ausgeglichen werden können.

Bei der Ausbildung gemäß Fig. 2 ist eine der beiden Dichtungslippen 12 des zentralen Hülsenbereichs 8 der Membrane 4 des ersten Ausführungsbeispiels entfallen (hier die rechte Dichtungslippe). Der der Dichtungslippe 12 gegenüberliegende Abschnitt 8b hat einen kleineren Innendurchmesser als der Abschnitt 8a zwischen der Dichtungslippe 12 und der Rippe 10. Die Außenwand der Membrane 4 im Bereich der Rippe verjüngt sich zu dem offenen Abschnitt 8b hin. Auf der Außenseite der Dichtungslippe 12 befindet sich ein kurzer zylindrischer Abschnitt 14 wie bei dem vorhergehend beschriebenen Ausführungsbeispiel. Benachbart zum offenen Abschnitt 8b des zentralen Hülsenbereichs befindet sich ein Innenwandbereich der Muffe 2, der mit der Innenwand des offenen Bereichs 8b fluchtet. Die Abwinkelungen der Muffe an der Außenseite (Winkel V) und die Fasen 18 sind wie bei dem vorhergehend beschriebenen Ausführungsbeispiel.

Das Rohr 20, das hier wiederum lediglich schematisch dargestellt ist, hat eine etwas größere Wandstärke. Etwas beabstandet von der Stirnseite 22 befindet sich eine ringförmige Aussparung in der ein Dichtungsring 24 aus Gummi angebracht ist. Der Dichtungsring 24 weist zwei beabstandet angeordnete Ringwülste 26 als Dichtungselemente auf. Diese treten beim Einschieben in die lange Seite der Kupplung mit dem Abschnitt 8b des zentralen Hülsenabschnitts 8 abdichtend in Eingriff.

Wie erwähnt, wird die Abdichtung an der langen Seite der Kupplung durch den Gummiring 24 erhalten. Wie Fig. 2 zeigt, wird die Dichtung durch zwei massive Ringwülste erhalten. Auch Lippendichtungen oder eine Kombination von Halbzylindern und Lippen können verwendet werden. Der Gummiring 24 ist so positioniert, daß die Dichtung gegen die Gummimembrane 4 in der Kupplung erfolgt. Der Grund dafür wird nachstehend erklärt.

An der kurzen Seite der Kupplung wird die Abdichtung durch die Lippe 12 erhalten, die ein Teil der Gummimembrane 4 ist. Die Gummimembrane 4 ist so weit verlängert, daß sie über den Hülsenteil 8 geht.

Die Dimensionierung wird so gemacht, daß bei einem Innendruck von 1,0 x PN bis 1,5 x PN (Nenndruck: 0,098 bis 0,147 MPa [0,98 bis 1,47 bar]) die Spalte zwischen dem Innendurchmesser des zylindrischen Abschnitts 14 und dem Außendurchmesser des Rohrs 20 (Fig. 1) bzw. zwischen dem Innendurchmesser des Hülsenabschnitts 8b und dem Röhraußendurchmesser (Fig. 2) Null sind. Bei dieser Dimensionierung wird angenommen, daß bei einem Nenndruck PN die Dehnung infolge Innendruck ein gewisses festgelegtes Maß hat. Leider ist so ein Wert nicht immer konstant, sondern hat große Streuungen. Dazu kommt auch das Kriechen mit der Zeit. Es kann vorkommen, daß beim Betrieb sich die Rohrenden satt an die Kupplung anpressen. Deswegen muß sich der Gummiring 24 am Rohrende gegen die Gummimembrane 4 anpressen, weil hier sonst zu große Spannungen in der Kupplung entstehen. Beim kleinen Ende (das die Dichtungslippe 12 aufweist) genügt es, wenn bei dem zylindrischen Teil 14 Gummi in genügend Dicke vorhanden ist. Die Dicke soll mindestens 2 mm sein. Wichtig ist, daß der zylindrische Teil 14 sehr kurz ist, so daß der Gummi sich in die Längsrichtung ausdehnen kann, wenn zu hart angepreßt wird. Eine wichtige Dimensionierung ist auch der Winkel V. Dieser soll gleich der zulässigen Abwinklung der Kupplung sein. Die Gummimembrane 4 soll dann in dem Muffenteil in diesem Bereich verankert sein.

Es ist wichtig, daß die Verankerung des kurzen zylindrischen Abschnitts 14 im Winkelteil und nicht im zylindrischen Teil verankert ist, weil Harz bei den Winkeln unter dem Gummi eindringen kann, was gefährlich wäre, wenn solches Harz in dem zylindrischen Teil vorhanden wäre.

Um solches Eindringen zu verhindern, ist es von Vorteil, daß der Winkel V im Profil kleiner als der vorgesehene Winkel ist.

## Patentansprüche

1. Rohrkupplung mit einer Muffe (2) aus glasfaserverstärktem Kunststoff und einer Membrane (4) aus elastischem Material, welche auf wenigstens einer Seite als Dichtung ausgebildet ist und einen Hülsenteil (8) aufweist, wobei dort, wo die Membrane als Dichtung ausgebildet ist, bei dem Abschluß der Membrane, wo das Rohr eingeführt wird, ein kurzer Teil (14) zylindrisch vorliegt und wobei die Membrane (4) im zylindrischen Teil (14) eine konstante Wanddicke hat, über welche der glasfaserverstärkte Muffenteil der Rohrkupplung kommt, **dadurch gekennzeichnet, daß** außerhalb des zylindrischen Teils (14) die weitere Ausbildung der Rohrkupplung so gemacht ist, daß ein Winkel (V) eingebaut ist, welcher mindestens so groß wie die zulässige Abwinklung der Kupplung ist, und daß über diesem Winkelteil der Rohrkupplung die Membrane (4) in der Muffe (2) verankert ist.

2. Rohrkupplung nach Anspruch 1, **dadurch gekennzeichnet , daß** nur eine Seite mit einer Abwinklung (V) ausgebildet ist und die andere Seite keine Abwinklung eines Rohrs erlaubt.

3. Rohrkupplung nach Anspruch 2, **dadurch gekennzeichnet, daß** auf der Seite, wo keine Abwinkelung vorgesehen ist, die Dichtung durch einen Ring (24) aus elastischem Material mit Dichtungselementen (26) montiert auf dem vorderen Ende eines zu kuppelnden Rohres (20) vorgesehen ist und daß eine Dichtung der Dichtungselemente (26) gegen eine Membrane (4) aus elastischem Material in der Kupplung vorgesehen ist.

4. Rohrkupplung nach Anspruch 3, **dadurch gekennzeichnet, daß** auf der Seite, wo keine Abwinkelung vorgesehen ist, als Dichtung eine Dichtlippe auf dem vorderen Ende eines zu kuppelnden Rohres vorgesehen ist und eine Dichtung der Dichtlippe gegen die Membrane aus elastischem Material in der Kupplung vorgesehen ist.

5. Rohrkupplung nach einem der Ansprüche 1 bis 4, **dadurch gekennzeichnet, daß** die Membrane (4) aus Gummi ist.

6. Rohrkupplung nach Anspruch 4 oder 5, **dadurch gekennzeichnet, daß** die der mit Dichtungselementen versehene Ring (24) aus Gummi ist.

## Claims

1. Pipe coupling having a sleeve (2) consisting of glass fibre-reinforced synthetic material and a membrane (4) which consists of elastic material and is formed on at least one side as a seal and comprises a sleeve part (8), wherein at the site where the membrane is formed as a seal, a short part (14) is formed in a cylindrical manner at the end of the membrane where the pipe is introduced, and wherein the membrane (4) in the cylindrical part (14) has a constant wall thickness, over which the glass fibre-reinforced sleeve part of the pipe coupling fits, **characterised in that** outside the cylindrical part (14) the pipe coupling is further configured in such a manner that an angle (V) is included which is at least as large as the permissible bend of the coupling and that the membrane (4) is anchored in the sleeve (2) above this angle part of the pipe coupling.

2. Pipe coupling as claimed in claim 1, **characterised in that** only one side is formed with a bend (V) and the other side does not permit a bend in the pipe.

3. Pipe coupling as claimed in claim 2, **characterised in that** on the side where there is no bend, the seal is mounted by means of a ring (24) consisting of elastic material with sealing elements (26) and is provided on the front end of a pipe (20) which is to be coupled, and that a seal of the sealing elements (26) is provided in the coupling against a membrane (4) which consists of elastic material.

4. Pipe coupling as claimed in claim 3, **characterised in that** on the side where there is no bend, a sealing lip is provided as a seal on the front end of a pipe which is to be coupled and a seal of the sealing lip is provided in the coupling against the membrane which consists of elastic material.

5. Pipe coupling as claimed in any of claims 1 to 4, **characterised in that** the membrane (4) consists of rubber.

6. Pipe coupling as claimed in claim 4 or 5, **characterised in that** the ring (24) which is provided with sealing elements consists of rubber.

## Revendications

1. Accouplement de tuyaux avec un manchon de liaison (2) en matière plastique renforcée par fibres de verre et une membrane (4) en un matériau élastique, qui, d'un côté au moins, est conformée en joint d'étanchéité et présente une partie formant fourreau (8), une courte portion (14) cylindrique étant prévue à l'endroit où la membrane forme joint d'étanchéité, à l'extrémité de la membrane où le tuyau est emmanché, et la membrane (4) présentant une épaisseur constante dans la portion cylindrique sur laquelle s'étend la partie renforcée par fibres de verre du manchon, **caractérisé en ce qu'**à l'extérieur de la partie cylindrique (14), l'accouplement de tuyaux présente dans sa conformation un angle (V), qui est au moins égal à l'angle admissible par l'accouplement et **en ce que** la membrane (4) est ancrée dans le manchon (2) au niveau de cette partie formant un angle de l'accouplement de tuyaux.

2. Accouplement de tuyaux selon la revendication 1, **caractérisé en ce qu'**un côté seulement est pourvu d'un angle (V) et que l'autre côté ne permet pas de défaut d'alignement d'un tuyau.

3. Accouplement de tuyaux selon la revendication 2, **caractérisé en ce que** du côté où aucun angle n'est prévu, il est prévu de réaliser l'étanchéité à l'aide d'une bague (24) en matériau élastique pourvue d'éléments d'étanchéité (26), montée sur l'extrémité antérieure d'un tube (20) à coupler et **en ce qu'**il est prévu une étanchéité des éléments d'étanchéité (26) contre une membrane (4) en matériau élastique dans l'accouplement.

4. Accouplement de tuyaux selon la revendication 3, **caractérisé en ce que** du côté où aucun angle n'est prévu, il est prévu comme moyen d'étanchéité une lèvre d'étanchéité sur l'extrémité antérieure d'un tube à coupler et **en ce qu'**il est prévu une étanchéité de la lèvre d'étanchéité contre la membrane en matériau élastique dans l'accouplement.

5. Accouplement de tuyaux selon une des revendications 1 à 4, **caractérisé en ce que** la membrane (4) est en caoutchouc.

6. Accouplement de tuyaux selon la revendication 4 ou 5, **caractérisé en ce que** la bague (24) pourvue d'éléments d'étanchéité est en caoutchouc.
